# EUROPEAN PATENT APPLICATION

(11) **EP 4 819 573 A1**
(43) Date of publication of application: **07.10.2026**
(21) Application number: 25887848.7
(22) Date of filing: 03.09.2025
(51) Int. Cl.: H04L 47/2408, H04L 47/2441

(54) **SERVICE OFFLOADING METHOD AND ROUTING DEVICE**

(30) Priority: 06.11.2024 CN 202411581901
(71) Applicant: Huawei Technologies Co., Ltd., Shenzhen, Guangdong 518129 (CN)
(72) Inventor: YANG, Lin, Shenzhen, Guangdong 518129 (CN); PENG, Yicheng, Shenzhen, Guangdong 518129 (CN); YAN, Haoran, Shenzhen, Guangdong 518129 (CN)
(74) Representative: Goddar, Heinz J.
(86) International application number: PCT/CN2025/118839
(87) International publication number: WO 2026/098038

(57) **Abstract**

This application provides a service distribution method and a routing device, where the routing device accesses the Internet through a wired WAN, and the routing device accesses the Internet through a wireless WAN. After obtaining a data stream generated by a first application, the routing device sends a data stream whose service type is a low-latency service type to the wired WAN, and distributes a data stream whose service type is a non-low-latency service type to the wired WAN and the wireless WAN, so that the routing device can avoid sending a low-latency data stream to the wireless WAN when the wireless network is overlaid on the wired network, thereby ensuring user experience of using a low-latency service.

## Description

### CROSS-REFERENCE TO RELATED APPLICATIONS

This application claims priority to Chinese Patent Application No. 202411581901.4, filed with the China National Intellectual Property Administration on November 6, 2024 and entitled "SERVICE DISTRIBUTION METHOD AND ROUTING DEVICE", which is incorporated herein by reference in its entirety.

### TECHNICAL FIELD

Embodiments of this application relate to the field of communication technologies, and in particular, to a service distribution method and a routing device.

### BACKGROUND

As people have increasingly high requirements on Internet access experience, to reduce costs, operators usually use a manner of overlaying a wireless network on a wired network to increase network bandwidth of fixed broadband subscribers, so as to ensure Internet access experience of the fixed broadband subscribers. Currently, operators provide users with routing devices (for example, customer premise equipment (customer premise equipment, CPE)) that support both wired uplink and wireless uplink, to overlay a wireless network on a wired network.

However, after receiving data streams of services, the routing devices distribute the data streams of the services to the wired network and the wireless network based on a default distribution ratio. In this way, some low-latency services are distributed to the wireless network with relatively poor network stability. This degrades Internet access experience of the users.

### SUMMARY

Embodiments of this application provide a service distribution method and a routing device, to ensure Internet access experience of a user.

A first aspect provides a service distribution method. The method is applied to a routing device. The routing device accesses the Internet through a wired WAN, and the routing device may further access the Internet through a wireless WAN. The method includes the following.

The routing device obtains a data stream generated by a first application, and determines a service type of the data stream. When the service type is a low-latency service type, the routing device may send the data stream to the wired WAN, to transmit the data stream through the wired WAN. When the service type is a non-low-latency service type, the routing device may distribute the data stream to the wired WAN and the wireless WAN, to transmit the data stream through the wired WAN and the wireless WAN.

In the method, before transmitting the data stream, the routing device may determine the service type of the data stream to distinguish between a low-latency service and a non-low-latency service, send the low-latency service to the wired WAN, and distribute the non-low-latency service to the wired WAN and the wireless WAN. This can avoid sending a data stream of the low-latency service to the wireless WAN when a wireless network is overlaid on a wired network, thereby ensuring user experience of using the low-latency service, and further ensuring Internet access experience of a user.

In a possible design, the routing device may obtain the data stream in a process in which the routing device runs the first application; or the routing device may obtain the data stream from a first device in a process in which the first device runs the first application.

In a possible design, when the data stream is the data stream of the first device and the data stream is a pre-sequence stream, the routing device may perform service identification on the data stream and determine the service type of the data stream, where the pre-sequence stream includes a data packet generated when the first application is started; or when the data stream is the data stream of the first device and the data stream is a core stream, the routing device may determine the service type of the data stream based on an identifier of the first device, where the core stream includes a data packet generated in a running process after the first application is started.

According to this design, the routing device may perform service type identification on a pre-sequence stream of the first device, and determine a service type of the pre-sequence stream of the first device. In this way, the routing device may subsequently determine a service type of a core stream of the first device based on an identifier of the first device for which the service type of the pre-sequence stream has been determined, so that a transmission path of the data stream of the first device can be determined based on the service type of the pre-sequence stream, thereby ensuring that a transmission path of the data stream remains unchanged in a transmission process.

In a possible design, when a stored mapping relationship between a device identifier and a low-latency service type includes the identifier of the first device, the routing device may determine that the service type of the data stream is a low-latency service type; or when a stored mapping relationship between a device identifier and a low-latency service type does not include the identifier of the first device, the routing device may determine that the service type of the data stream is a non-low-latency service type.

In this design, the routing device may determine, based on whether the stored mapping relationship between the device identifier and the low-latency service type includes the identifier of the first device, a service type of the data stream of the first device that is subsequently received by the routing device, and does not need to identify a service type of a subsequently received core stream, so that a transmission path of the data stream in a transmission process can be ensured to remain unchanged.

In a possible design, when the data stream is a pre-sequence stream and the service type of the data stream is a low-latency service type, the routing device may further store the identifier of the first device in the mapping relationship between the device identifier and the low-latency service type.

In this design, the routing device may determine, based on the identifier of the first device that is stored in the mapping relationship between the device identifier and the low-latency service type, that the service type of the subsequently received core stream of the first device is a low-latency service type, so that a transmission path of the data stream in a transmission process can be ensured to remain unchanged.

In a possible design, when the data stream is the core stream and the service type of the data stream is the low-latency service type, the routing device may further perform traffic statistics collection on the data stream, and determine a quantity of core stream data packets of the data stream in at least one first duration closest to a current moment; when the quantity of core stream data packets of the data stream in the at least one first duration closest to the current moment is less than or equal to a preset value, determine that a transmission status of the data stream is that transmission ends; and delete the identifier of the first device from the stored mapping relationship between the device identifier and the low-latency service type.

According to this design, when determining that the service type of the core stream is a low-latency service type, the routing device may further perform traffic statistics collection on the core stream to determine a transmission end moment of the core stream, and when determining that transmission of the core stream ends, delete the identifier of the first device from the stored mapping relationship between the device identifier and the low-latency service type, so that a subsequent data stream of the first device can be distributed based on a distribution ratio. In this way, user experience of using a low-latency service can be ensured, and user bandwidth can be increased, thereby improving Internet access experience of a user.

In a possible design, when the service type is a low-latency service type, the routing device may add a first mark to each of a plurality of data packets included in the data stream, to obtain a plurality of first data packets, where the first mark indicates to transmit a data packet through the wired WAN; and the routing device sends the plurality of first data packets to the wired WAN.

In this design, the routing device may add the first mark to the plurality of data packets included in the data stream whose service type is a low-latency service type, and send the low-latency data stream to the wired WAN, to avoid transmitting the low-latency data stream over the wireless WAN, thereby ensuring user experience of using a low-latency service.

In a possible design, when the service type is a non-low-latency service type, the routing device may send a plurality of second data packets included in the data stream to the wired WAN, and send a plurality of third data packets included in the data stream to the wireless WAN, where a ratio of a quantity of the plurality of second data packets to a quantity of the plurality of third data packets is a distribution ratio of the wired WAN to the wireless WAN.

Optionally, the second data packet includes a first mark, the third data packet includes a second mark, and the second mark indicates to transmit a data packet through the wireless WAN.

According to this design, the routing device distributes the data stream of the non-low-latency service type to the wired WAN and the wireless WAN based on the distribution ratio, to achieve an objective of increasing user bandwidth.

A second aspect provides a routing device, including one or more processors and one or more memories. The one or more memories are configured to store one or more programs, and the one or more processors are configured to execute the one or more programs stored in the one or more memories, so that the device performs the method according to any one of the first aspect or the possible designs of the first aspect.

A third aspect provides a readable storage medium (which may also be referred to as a computer-readable storage medium). The readable storage medium stores a program or instructions. When the program or the instructions are executed by a routing device, the routing device performs the method according to any one of the first aspect or the possible designs of the first aspect.

A fourth aspect provides a chip. The chip is coupled to a memory in a device, so that the chip invokes, when running, one or more programs stored in the memory, to implement the method according to any one of the first aspect or the possible designs of the first aspect.

A fifth aspect provides a program product (which may also be referred to as a computer program product). The program product includes a program or instructions. When the program or the instructions are executed by a routing device, the routing device performs the method according to any one of the first aspect or the possible designs of the first aspect.

### BRIEF DESCRIPTION OF DRAWINGS

FIG. 1 is a diagram of an architecture of a communication system;
FIG. 2 is a diagram of a possible hardware structure of a device according to an example of this application;
FIG. 3 is a schematic flowchart of a service distribution method according to this application;
FIG. 4 is a diagram of a structure of a service distribution system according to this application;
FIG. 5 is a diagram of a UX interface according to this application;
FIG. 6A and FIG. 6B are a schematic flowchart of a service distribution use case according to this application;
FIG. 7A and FIG. 7B are a schematic flowchart of another service distribution use case according to this application;
FIG. 8A and FIG. 8B are a schematic flowchart of still another service distribution use case according to this application; and
FIG. 9A and FIG. 9B are a schematic flowchart of still yet another service distribution use case according to this application.

### DESCRIPTION OF EMBODIMENTS

The following describes technical solutions in embodiments of this application in detail with reference to accompanying drawings in embodiments of this application. The following describes technical solutions in embodiments of this application in detail with reference to accompanying drawings in embodiments of this application.

First, concepts related to embodiments of this application are described.
(1) Wired uplink refers to a process of uploading data of a routing device (for example, customer premise equipment (customer premise equipment, CPE)) to the Internet through a physical cable (for example, an optical fiber, a copper cable, or the like). The wired uplink is characterized by a high transmission speed and high stability, and is applicable to a scenario in which a large amount of data needs to be uploaded. In embodiments of this application, the wired uplink refers to a process of uploading the data of the routing device to the Internet through a wired wide area network (wide area network, WAN). The wired WAN may also be referred to as a wired network, a fixed network, a broadband network, or the like. This is not limited herein.
(2) Wireless uplink refers to a process of uploading data of a routing device (for example, CPE) to the Internet through a wireless signal (for example, a wireless fidelity (wireless fidelity, Wi-Fi) network, a cellular network, or the like). The wireless uplink is convenient and fast, and does not require physical cable connections. However, a transmission speed and stability are relatively low due to factors such as signal strength, interference, and a quantity of users accessing a cell. In embodiments of this application, the wireless uplink refers to a process of uploading the data of the routing device to the Internet through a wireless WAN. The wireless WAN may also be referred to as a wireless network, a mobile network, or the like. This is not limited herein.
(3) A routing device is a device that can support wired uplink and wireless uplink, for example, a device that has a fixed network communication function and a cellular communication function. In other words, the routing device may access the Internet through a wired WAN, and may further access the Internet through a wireless WAN. For example, the routing device may be a device that can support wired uplink and wireless uplink, such as CPE. The CPE may include two uplink WAN interfaces: one is used to connect to an external wired WAN, and the other is used to connect to an external wireless WAN, so that the CPE can access the Internet and provide a network service for a user.

In embodiments of this application, the routing device may receive a data signal of a device connected to the routing device, convert the data signal into a mobile signal or a wired broadband signal, and transmit the mobile signal or the wired broadband signal to the wireless WAN or the wired WAN. In addition, the routing device may further convert a data signal generated by the routing device into a mobile signal or a wired broadband signal, and transmit the mobile signal or the wired broadband signal to the wireless WAN or the wired WAN.

(4) An optical network terminal (optical network terminal, ONT) is a device used in an optical fiber communication network, and a main function of the optical network terminal is to convert an optical signal into a data signal for use by user equipment (for example, a computer, a router, and the like). In addition, the optical network terminal may also convert a data signal of the user equipment into an optical signal for transmission in the optical fiber network.

(5) An optical line terminal (optical line terminal, OLT) is office equipment in a passive optical network (PON) system, and is connected to a plurality of ONTs (optical network terminals) through optical fibers to exchange information between a network side and a user side. The OLT is configured to convert an optical signal into an electrical signal for transmission, or convert an electrical signal into an optical signal for sending.

In embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit sizes, content, an order, a time sequence, priorities, importance, or the like of the plurality of objects. For example, a first file and a second file are merely used to distinguish between different files, but do not indicate different sizes, content, priorities, importance, or the like of the two files.

The following describes in detail embodiments of this application with reference to accompanying drawings.

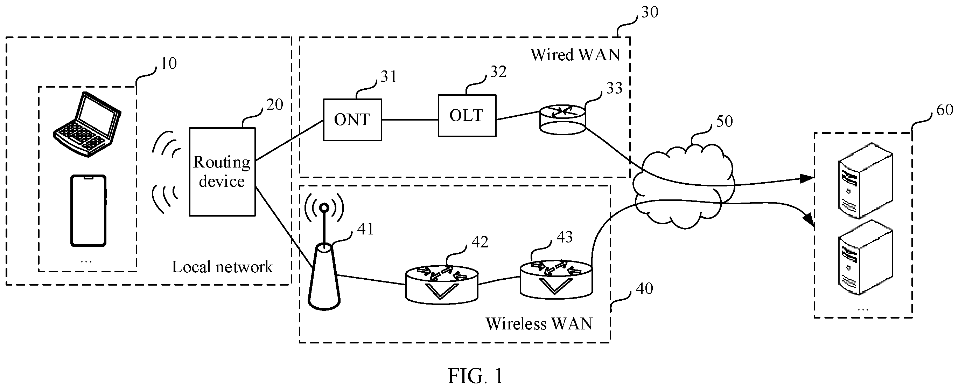

FIG. 1 is a diagram of an architecture of a communication system to which a method according to an embodiment of this application is applicable. Specifically, the communication system includes a device 10, a routing device 20, a wired WAN 30, a wireless WAN 40, the Internet 50, and a server 60. For example, as shown in FIG. 1, the wired WAN 30 may be an optical network, and at least includes the following devices: an optical network terminal (optical network terminal, ONT) 31, an optical line terminal (optical line terminal, OLT) 32, and a gateway (gateway) 33. The wireless WAN 40 includes at least the following devices: a base station 41, a serving gateway (serving gateway, SGW)/session management function (session management function, SMF) 42, and a personal navigation device gateway (personal navigation device gateway, P-GW)/user plane function (user plane function, UPF) 43.

The device 10 includes a plurality of devices, and the server 60 includes a plurality of servers. The device 10 and the routing device 20 form a local network, and may be connected to the Internet 50 through the wired WAN and the wireless WAN. To be specific, the device 10 is connected to the ONT 31 and the base station 41 through the routing device 20, to implement Internet access. For example, the device 10 may be connected to Wi-Fi provided by the routing device 20, and the device 10 communicates with the routing device 20 through Wi-Fi. In addition, the device 10 may also communicate with the routing device 20 through a wired connection.

In some embodiments, a plurality of applications that need a network service are installed on each device in the device 10, and the plurality of servers included in the server 60 may provide, for the plurality of applications installed on each device, service data required when the applications run. To be specific, a plurality of applications that need to access the Internet are installed on each device in the device 10, for example, a game application, a live broadcast application, a video application, a chat application, and the like. For example, when a first device in the device 10 runs a first application, the first device needs to send, to a server corresponding to the first application in the server 60, a data stream generated when the first application runs, to obtain required service data. The first application is any one of the plurality of applications. The data stream includes a destination Internet Protocol (internet protocol, IP) address, and the destination IP address is an IP address of the server corresponding to the first application. For example, in a running process of the first application, the first application needs to exchange data with the server corresponding to the first application in the server 60, to meet a service requirement of a user. In other words, in a running process of the first application, the first device needs to send a data stream to the server corresponding to the first application in the server 60.

In a process in which the first device in the device 10 transmits a data stream to the server corresponding to the first application in the server 60, the first device may send the data stream generated in the running process of the first application to the routing device 20, and the routing device 20 distributes the data stream to the wired WAN and the wireless WAN. In this way, the data stream is transmitted to the Internet 50 through the wired WAN and the wireless WAN. After receiving the data stream, the Internet 50 may send the data stream to the corresponding server 60 based on a destination IP address of the data stream. In the foregoing manner, when the user uses a service provided by the first application on the first device, the routing device 20 may distribute the data stream generated in the running process of the first application to the wired WAN and the wireless WAN, to overlay a wireless network on a wired network, thereby increasing user bandwidth and ensuring Internet access experience of the user. The user in embodiments of this application may be a fixed broadband subscriber.

However, in the conventional technology, the routing device 20 distributes the data stream to the wired WAN and the wireless WAN based on a default distribution ratio. In this way, data streams of some services (for example, low-latency services) that require stable network performance are distributed to the wireless WAN with relatively poor network stability. This degrades Internet access experience of the user.

In view of this, embodiments of this application provide a service distribution method and a routing device. In the method, the routing device supports wired uplink and wireless uplink, that is, the routing device accesses the Internet through a wired WAN, and the routing device may further access the Internet through a wireless WAN. After obtaining a data stream generated by a first application, the routing device may determine a service type of the data stream. The service type includes a low-latency service type and a non-low-latency service type. When the service type of the data stream is a low-latency service type, the routing device may send the data stream to the wired WAN, to transmit the data stream through the wired WAN. When the service type of the data stream is a non-low-latency service type, the routing device may further distribute the data stream to the wired WAN and the wireless WAN, to transmit the data stream through the wired WAN and the wireless WAN. In this way, before distributing the data stream, the routing device needs to first determine the service type of the data stream to distinguish between a data stream of a low-latency service type and a data stream of a non-low-latency service type, send the data stream of the low-latency service type to the wired WAN, and distribute the data stream of the non-low-latency service type to the wired WAN and the wireless WAN. This can avoid distributing a low-latency service to the wireless WAN when a wireless network is overlaid on a wired network, thereby ensuring user experience of using a low-latency service, and further ensuring Internet access experience of a user.

Embodiments of this application may be applied to various routing devices that support wired uplink and wireless uplink. As shown in FIG. 1, a routing device is separately connected to a wired WAN and a wireless WAN. The routing device may access the Internet through the wired WAN, and the routing device may further access the Internet through the wireless WAN.

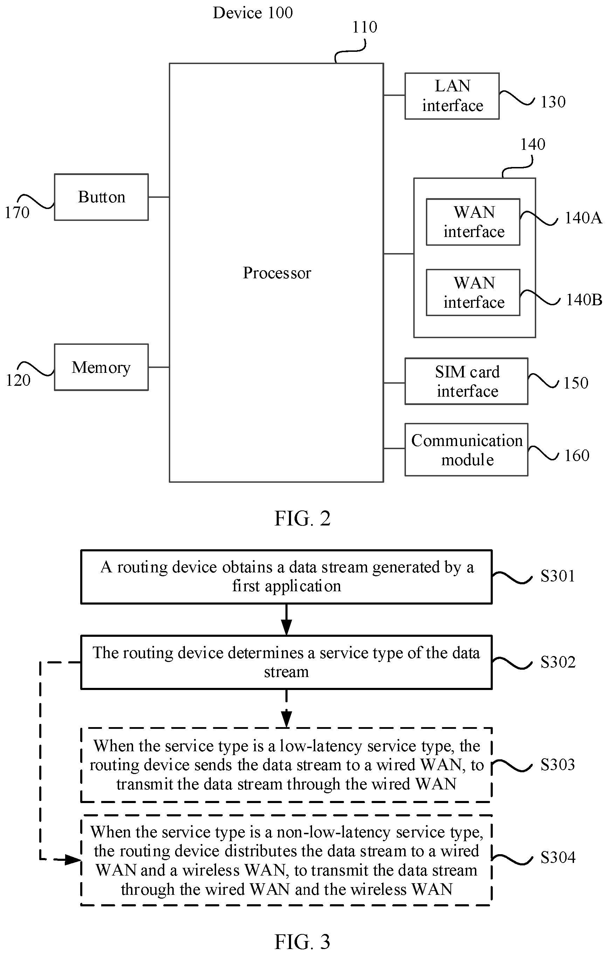

FIG. 2 is a diagram of a possible hardware structure of a device. The device 100 may be the routing device 20 in FIG. 1. As shown in FIG. 2, the device 100 may include a processor 110, a memory 120, a local area network (local area network, LAN) interface 130, a WAN interface 140, a subscriber identification module (subscriber identification module, SIM) card interface 150, a communication module 160, a button 170, and the like.

The processor 110 may include one or more processing units. Different processing units may be independent components, or may be integrated into one or more processors. The controller may be a nerve center and a command center of the device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The memory 120 may be configured to store program code, and the program code includes instructions. The processor 110 runs the instructions stored in the memory 120, to perform various functional applications and data processing of the device 100. The memory 120 may include a program storage area and a data storage area. The program storage area may store an operating system, software code of at least one application, and the like. The data storage area may store data generated in a process of using the device 100, and the like. In addition, the memory 120 may include a high-speed random access memory, and may further include a nonvolatile memory, for example, at least one magnetic disk storage device, or a flash storage device.

The LAN interface 130 and the WAN interface 140 are configured to connect to a LAN interface and a WAN interface of another device, to implement information transmission between devices. It should be understood that, in embodiments of this application, there is at least one LAN interface, and there may be a plurality of WAN interfaces. For example, as shown in FIG. 2, the WAN interface 140 includes a WAN interface 140A and a WAN interface 140B. The WAN interface 140A is configured to connect to a wired WAN, and the WAN interface 140B is configured to connect to a wireless WAN.

The SIM card interface 150 is configured to connect to a SIM card. The SIM card may be inserted into the SIM card interface 150 or removed from the SIM card interface 150, to implement contact with or separation from the device 100. In a possible implementation, the device 100 may alternatively use an eSIM, that is, an embedded SIM card. The eSIM card may be embedded into the device 100, and cannot be separated from the device 100. In other words, in embodiments of this application, the device 100 may alternatively implement a function of inserting the SIM card into the SIM card interface by enabling a service by using the eSIM card.

The communication module 160 may provide a wireless communication solution that is applied to the device 100 and includes a wireless local area network (wireless local area networks, WLAN) (for example, a Wi-Fi network) and Bluetooth (Bluetooth, BT). The communication module 160 may be one or more devices integrating at least one communication processing module.

The button 170 may be a mechanical button, or may be a touch button. For example, the button 170 may be a reset button.

In embodiments of this application, the processor 110 may obtain a data stream generated by a first application, and determine a service type of the data stream. When the service type is a low-latency service type, the processor 110 may send the data stream to the wired WAN, to transmit the data stream through the wired WAN. When the service type is a non-low-latency service type, the processor 110 may further distribute the data stream to the wired WAN and the wireless WAN, to transmit the data stream through the wired WAN and the wireless WAN.

It may be understood that components shown in FIG. 2 do not constitute a specific limitation on the device 100. The device 100 may further include more or fewer components than those shown in the figure, or some components may be combined, or some components may be split, or there may be a different component arrangement. In the following embodiments, the device 100 shown in FIG. 2 is used as an example for description.

For ease of understanding of a service distribution method provided in this application, the following describes, with reference to specific embodiments, a service distribution method that is used in a communication system including a routing device, a device, a wired WAN, a wireless WAN, the Internet, and a server. The communication system may be the communication system shown in FIG. 1. In embodiments of this application, the routing device may be the routing device 20 shown in FIG. 1, and supports wired uplink and wireless uplink. In other words, the routing device may access the Internet through the wired WAN, and the routing device may further access the Internet through the wireless WAN. For example, when the routing device is a CPE, the routing device may include at least two uplink WAN interfaces: one uplink WAN interface may be an interface connected to the wired WAN, and the other uplink WAN interface may be an interface connected to the wireless WAN. For ease of description, in accompanying drawings corresponding to embodiments of this application, all optional steps are represented by dashed lines.

In some embodiments, the routing device may be connected to one or more devices to provide a network service for the one or more devices. A plurality of applications that need to be connected to the Internet are installed on the one or more devices. A plurality of applications that need to be connected to the Internet are also installed on the routing device. The routing device may forward a data stream of one or more devices to the wired WAN and/or the wireless WAN, to transmit the data stream of the one or more devices to the Internet through the wired WAN and/or the wireless WAN. The data stream of the one or more devices may be a data stream generated when an application installed on the one or more devices runs. In addition, the routing device may further send a data stream of the routing device to the wired WAN and/or the wireless WAN, to transmit the data stream of the routing device to the Internet through the wired WAN and/or the wireless WAN. The data stream of the routing device is a data stream generated by an application installed on the routing device.

After obtaining the data stream, the routing device may distribute the data stream, and transmit the data stream to the Internet through the wired WAN and/or the wireless WAN. For example, as shown in FIG. 3, the device may distribute the data stream by using the following steps.

S301: The routing device obtains a data stream generated by a first application.

The data stream indicates an ordered sequence of byte data that is continuously generated and output by the first application in a running process and that has a start point and an end point. The data stream may include an input stream read by the first application from an external data source (for example, a keyboard, a file, or a network) and an output stream output by the first application to the outside. In embodiments of this application, the data stream may be transmitted by using a transmission control protocol (transmission control protocol, TCP), or may be transmitted by using a user datagram protocol (user datagram protocol, UDP).

In embodiments of this application, the data stream may be a data stream of the routing device, or may be a data stream of a first device. The first device is any one of the one or more devices. The data stream can be divided into a pre-sequence stream (pre-sequence flow, PSF) and a core stream (core flow, CF). The pre-sequence stream includes a data packet generated when the first application is started. For example, the pre-sequence stream may be a data stream generated by the first application when the first application is initially started. The core stream includes a data packet generated in a running process after the first application is started. For example, the core stream may be a data stream generated in a running process after the first application is started. The core stream is a data stream that needs to be guaranteed by a user in embodiments of this application.

In an example, in a process in which the routing device runs the first application, the routing device may obtain a data stream. In this case, the first application is any one of one or more applications running on the routing device. For example, the routing device may run the first application in response to an operation performed by the user on the first application, and obtain a data stream generated in a running process of the first application. The operation performed by the user on the first application may be an operation of starting the first application, or may be an operation of updating display content of the first application. For another example, the routing device may alternatively periodically run the first application. For example, when the routing device is CPE, the device may periodically run the first application to report a routing log.

In another example, in a process in which the first device runs the first application, the routing device may obtain a data stream from the first device. In this case, the first application is any one of one or more applications running on the first device. For example, the first device may run the first application in response to an operation performed by the user on the first application. The operation performed by the user on the first application may be an operation of starting the first application, or may be an operation of updating display content of the first application. For example, the user may tap an icon of the first application on a display of the first device, to trigger starting of the first application. For another example, the user may perform, on a user interface of the first application displayed on the display of the first device, the operation of updating the display content of the first application. For example, when the first application is a live broadcast application, the user may tap, in a user interface of the live broadcast application, a live broadcast window displayed in the user interface, to trigger playing of live broadcast content. In the process of running the first application, the first device may send, to the routing device, the data stream generated by the first application.

S302: The routing device determines a service type of the data stream.

The service type includes but is not limited to a low-latency service type and a non-low-latency service type. For example, a low-latency service whose service type is a low-latency service type includes but is not limited to a live broadcast service, a game battle service, and a cloud game service. A non-low-latency service whose service type is a non-low-latency service type may be a high-bandwidth service, or may be another service. The another service may be a service that does not have a high requirement for latency. For example, the non-low-latency service includes but is not limited to a download service, a video on demand service, a network speed test service, and the like.

After obtaining the data stream, the routing device may determine the service type of the data stream based on a source of the data stream. The source of the data stream may be the routing device, or may be the first device.

In some embodiments, when the data stream is a data stream of the routing device, the routing device may determine, when obtaining the data stream, the service type of the data stream based on the first application that generates the data stream. For example, when the first application is a remote management application, the routing device may determine that a data stream generated by the remote management application is of a low-latency service type. For another example, when the first application is a log reporting application, the routing device may determine that a service type of a data stream generated by the log reporting application is a non-low-latency service type.

In some other embodiments, when the data stream is the data stream of the first device, after receiving the data stream, the routing device may first determine whether the received data stream is a pre-sequence stream or a core stream, and then determine a service type of the data stream. The data stream received by the routing device may be a pre-sequence stream, or may be a core stream.

In an example, when determining that the received data stream is a pre-sequence stream, the routing device may perform service identification on the data stream to determine a service type of the data stream. When the service type is a low-latency service type, the routing device may mark the first device as a low-latency device. In this way, when subsequently receiving a data stream from the first device, the routing device may determine that a service type of the data stream is a low-latency service type.

For example, when the routing device determines that the service type of the pre-sequence stream is a low-latency service type, the routing device may further mark an identifier of the first device. The identifier of the first device may be a media access control (media access control, MAC) address of the first device, or may be another identifier of the first device. This is not limited herein. For example, when the service type of the pre-sequence stream is a low-latency service type, the routing device may store the identifier of the first device in a mapping relationship between a device identifier and a low-latency service type, to mark the identifier of the first device. In this way, when subsequently receiving a data stream sent by the first device, the routing device may determine a service type of the data stream based on the stored mapping relationship between the device identifier and the low-latency service type.

In another example, when determining that the received data stream is a core stream, the routing device may determine a service type of the data stream based on an identifier of the first device. For example, the routing device may determine the identifier of the first device that sends the core stream, and determine whether a stored mapping relationship between a device identifier and a low-latency service type includes the identifier of the first device. When the stored mapping relationship between the device identifier and the low-latency service type includes the identifier of the first device, the routing device may determine that the service type of the core stream is a low-latency service type. When the stored mapping relationship between the device identifier and the low-latency service type does not include the identifier of the first device, the routing device may determine that the service type of the core stream is a non-low-latency service type.

S303: When the service type is a low-latency service type, the routing device sends the data stream to the wired WAN, to transmit the data stream through the wired WAN.

When determining that the service type is a low-latency service type, the routing device determines that transmission of the data stream requires a network having a relatively stable network environment. Therefore, the routing device may send the data stream to the wired WAN.

In some embodiments, when determining that the service type of the data stream is a low-latency service type, the routing device may add a first mark to each of a plurality of data packets included in the data stream, to obtain a plurality of first data packets. The routing device may send the plurality of first data packets with the first mark in the plurality of data packets to the wired WAN. The first mark indicates to transmit a data packet through the wired WAN. For example, the first mark may be a mark mark, and the data packet in the data stream may be transmitted in a form of a socket kernel buffer (socket kernel buffer, SKB) packet.

In a process in which the routing device transmits the data stream, the routing device may further perform traffic statistics collection on the data stream of the first device, to determine a transmission status of the data stream of the first device. The transmission status that is of the data stream of the first device and that is determined by the routing device is a transmission status of a core stream of the first device. For example, the routing device may perform traffic statistics collection on the data stream of the first device, to determine a quantity of core stream data packets of the data stream of the first device in at least one first duration closest to a current moment. The quantity of core stream data packets includes a quantity of transmit (transmit, Tx) packets and a quantity of receive (receive, Rx) packets. The routing device may collect statistics on a quantity of core stream data packets based on IP 5-tuple information of the data stream of the first device. The IP 5-tuple information includes a source IP address, a destination IP address, a source port number, a destination port number, and a protocol type. When determining that the quantity of core stream data packets of the data stream of the first device in the at least one first duration closest to the current moment is less than or equal to a preset value, the routing device may determine that the transmission status of the data stream of the first device is that transmission ends. For example, the first duration may be set to 10 seconds, or may be set to 15 seconds, or may be set to another time length. This is not limited herein. The preset value may be set to 2, or may be set to another value. This is not limited herein. In this case, the routing device may mark the first device as a non-low-latency device, and delete the identifier of the first device from the stored mapping relationship between the device identifier and the low-latency service type. In this way, a service type of a data stream subsequently transmitted by the first device to the routing device is a non-low-latency service type.

S304: When the service type is a non-low-latency service type, the routing device distributes the data stream to the wired WAN and the wireless WAN, to transmit the data stream through the wired WAN and the wireless WAN.

In some embodiments, when the routing device determines that the service type of the data stream is a non-low-latency service type, the routing device may send a plurality of second data packets included in the data stream to the wired WAN, and send a plurality of third data packets included in the data stream to the wireless WAN. A ratio of a quantity of the plurality of second data packets to a quantity of the plurality of third data packets is a distribution ratio of the wired WAN to the wireless WAN. The data stream includes the plurality of second data packets and the plurality of third data packets. The distribution ratio may be preset by an operator in the routing device according to a user requirement, or may be configured by the user in a web user interface (website user interface, WEBUI) of the routing device, or may be configured by an operator through a maintenance and management server. For example, the distribution ratio may be wired WAN:wireless WAN=1:1, or may be wired WAN:wireless WAN=2:1. This is not limited herein.

In some examples, when determining that the service type of the data stream is a non-low-latency service type, the routing device may divide, based on a default distribution ratio, a plurality of data packets included in the data stream into a plurality of second data packets and a plurality of third data packets. For example, the routing device may divide the plurality of data packets in the data stream into the second data packets and the third data packets based on a ratio of 1:1. A ratio of a quantity of the second data packet to a quantity of the third data packets is 1:1.

In some other examples, when determining that the service type of the data stream is a non-low-latency service type, the routing device may further determine a specific service type in the non-low-latency service type that the data stream belongs to. The non-low-latency service type may include a high-bandwidth service type and another service type. The high-bandwidth service type and the another service type each correspond to one distribution ratio, that is, the preset distribution ratio may include a plurality of distribution ratios. The routing device may select, from the plurality of distribution ratios, a distribution ratio corresponding to a specific service type of the data stream. The routing device may determine, based on the selected distribution ratio, a quantity of second data packets and a quantity of third data packets included in the data stream.

For example, the non-low-latency service type includes a high-bandwidth service type and another service type, and the preset distribution ratio includes a distribution ratio 1 and a distribution ratio 2. The distribution ratio 1 is wired WAN:wireless WAN=1:1, and the distribution ratio 2 is wired WAN:wireless WAN=2:1. A distribution ratio corresponding to the high-bandwidth service type is the distribution ratio 1, and a distribution ratio corresponding to the another service type is the distribution ratio 2. When determining that the service type of the data stream is the high-bandwidth service type, the routing device determines, based on the distribution ratio 1 corresponding to the high-bandwidth service type, a quantity of second data packets that are in the plurality of data packets included in the data stream and that need to be sent to the wired WAN and a quantity of third data packets that need to be sent to the wireless WAN.

After determining the distribution ratio for dividing the plurality of data packets in the data stream, the routing device may divide, based on the determined distribution ratio, the plurality of data packets included in the data stream into a plurality of second data packets and a plurality of third data packets. The second data packet includes a first mark, the third data packet includes a second mark, and the second mark indicates to transmit a data packet through the wireless WAN. For example, when the distribution ratio is 1:1, the routing device may divide the plurality of data packets included in the data stream into two parts of data packets in an equal quantity. The routing device may add the first mark to each of some data packets, to obtain the plurality of second data packets. The routing device may further add a second mark to each of other data packets, to obtain the plurality of third data packets.

After obtaining the plurality of second data packets and the plurality of third data packets, the routing device may send the plurality of second data packets to the wired WAN, and send the plurality of third data packets to the wireless WAN, to complete distribution of the data stream.

According to the content described in the foregoing embodiment, before distributing a data stream, a routing device needs to determine a service type of the data stream. In this way, a data stream whose service type is a low-latency service type may be sent to a wired WAN, and a data stream whose service type is a non-low-latency service type is distributed to the wired WAN and a wireless WAN, thereby avoiding distributing the data stream of the low-latency service type to the wireless WAN with an unstable network, and further reducing impact on a low-latency service of a user while increasing bandwidth.

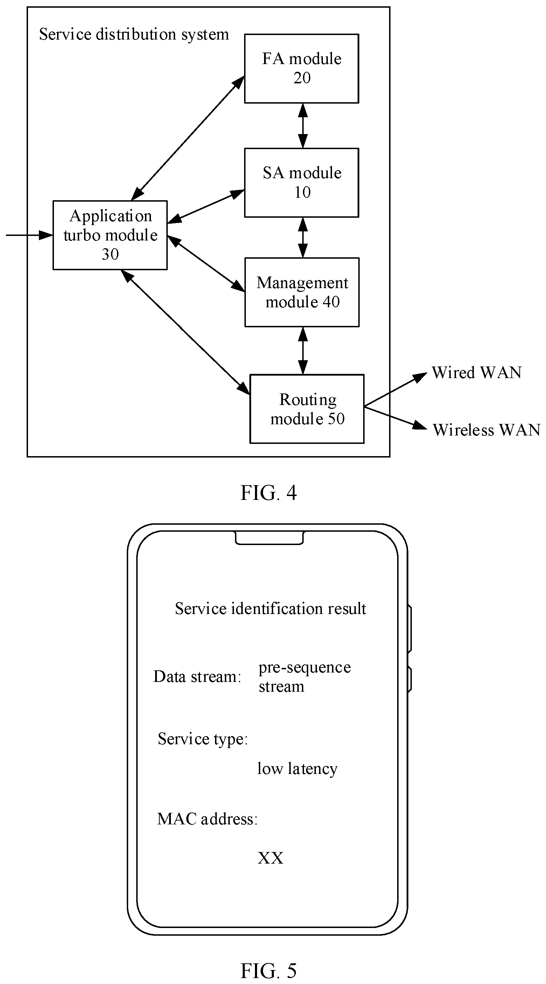

According to the foregoing embodiments, an embodiment of this application further provides a service distribution system, used in a routing device. The routing device may be the routing device 20 shown in FIG. 1. The routing device may support wired uplink and wireless uplink. As shown in FIG. 4, the system includes a service awareness (service awareness, SA) module 10, a stream awareness (flow awareness, FA) module 20, an application turbo (application Turbo, APP turbo) module 30, a management module 40, and a routing module 50.

The SA module 10 is configured to identify a service type of a data stream generated by a first application. The data stream may be a data stream of the routing device, or may be a data stream of a first device, and the service type may include a low-latency service type and a non-low-latency service type. When the data stream is the data stream of the first device, the SA module 10 may further collect statistics on a quantity of service packets of the data stream. The data stream of the first device may include a pre-sequence stream and a core stream. In some scenarios, after receiving the data stream of the first device, the SA module 10 may determine whether the data stream of the first device is a pre-sequence stream or a core stream. For example, when the data stream of the first device is a pre-sequence stream, the SA module 10 may determine the service type of the data stream of the first device. When the SA module 10 determines that the service type of the data stream of the first device is a low-latency service type, the SA module 10 may mark the first device as a low-latency service device. For example, the SA module 10 may store an identifier of the first device in a mapping relationship between a device identifier and a low-latency service type. For another example, when the data stream of the first device is a core stream, the SA module 10 may collect statistics on a quantity of core stream data packets of the data stream of the first device.

The FA module 20 is configured to perform traffic statistics collection on the core stream, and update the mapping relationship between the device identifier and the low-latency service type based on a statistics collection result. In some scenarios, after receiving the data stream of the first device, the SA module 10 may further send IP 5-tuple information of the data stream of the first device to the FA module 20. The FA module 20 may perform traffic statistics collection on the core stream based on the IP 5-tuple information. For example, the FA module 20 may query the SA module 10 for the quantity of the core stream data packets based on the IP 5-tuple information. The FA module 20 may determine a transmission status of the core stream by determining whether a quantity of core stream data packets of the data stream of the first device in at least one first duration closest to a current moment is greater than a preset value. When the quantity of core stream data packets of the data stream of the first device in the at least one first duration closest to the current moment is less than or equal to the preset value, the FA module 20 may determine that the transmission status of the core stream is that transmission ends, and delete, from the stored mapping relationship between the device identifier and the low-latency service type, the identifier of the first device corresponding to the core stream.

The APP turbo module 30 is configured to: obtain the data stream generated by the first application, and transmit the data stream to the SA module 10. The APP turbo module 30 is further configured to: control the SA module 10 to perform service identification on the data stream, and display, in a user experience (user experience, UX) interface, a service identification result of the data stream performed by the SA module 10. For example, the service identification result includes but is not limited to: the data stream is a data stream of the routing device or a data stream of the first device, the data stream of the first device is a pre-sequence stream or a core stream, a service type of the data stream, and a MAC address of the first device that sends the data stream of the first device. The APP turbo module 30 may be further used to configure a routing rule for the routing module 50. For example, the routing rule includes but is not limited to: a distribution ratio, and a mapping relationship between a mark (for example, a mark mark) and a WAN. The mapping relationship between the mark and the WAN includes but is not limited to: a mapping relationship between a first mark and a wired WAN, and a mapping relationship between a second mark and a wireless WAN. In some scenarios, as shown in FIG. 5, the APP turbo module 30 may display a service identification result in a UX interface. In some other scenarios, the APP turbo module 30 may further configure a routing rule for the routing module 50 in response to a configuration operation of a user.

The management module 40 is configured to mark a plurality of data packets included in a data stream whose service type is a low-latency service type. For example, the management module 40 may receive a data stream from the SA module 10, and determine whether a service type of the data stream is a low-latency service type. When the service type of the data stream is a low-latency service type, the management module 40 adds a first mark to each of the plurality of data packets included in the data stream, and sends, to the routing module 50, a plurality of first data packets to which the first mark is added. When the service type of the data stream is a non-low-latency service type, the management module 40 may directly send the data stream to the routing module 50, or may divide, based on a distribution ratio, a plurality of data packets included in the data stream into a plurality of second data packets and a plurality of third data packets. The second data packet is a data packet transmitted through the wired WAN, and the third data packet is a data packet transmitted through the wireless WAN. A process in which the management module 40 divides, based on the distribution ratio, the plurality of data packets included in the data stream into the plurality of second data packets and the plurality of third data packets is the same as the process in which the routing device distributes the data stream to the wired WAN and the wireless WAN in the foregoing embodiment. Details are not described herein again. For example, the second data packet may include a first mark added by the management module 40, and the third data packet may include a second mark added by the management module 40. The first mark indicates to transmit a data packet through the wired WAN, and the second mark indicates to transmit a data packet through the wireless WAN. The management module 40 may send, to the routing module 50, a plurality of data packets to which mark is added.

The routing module 50 is configured to distribute the data packets to the wired WAN and the wireless WAN based on the marks in the data packets included in the data stream. The routing module 50 may parse the data packet to determine whether the first mark or the second mark is added to the data packet. For example, the routing module 50 may send the data packet to which the first mark is added to the wired WAN, and send the data packet to which the second mark is added to the wireless WAN. For another example, when the routing module 50 determines that the mark is not parsed out from the data packet included in the data stream, the routing module may distribute the data stream to the wired WAN and the wireless WAN. A process in which the routing module 50 distributes the data stream to the wired WAN and the wireless WAN is the same as the process in which the routing device distributes the data stream to the wired WAN and the wireless WAN in the foregoing embodiment. Details are not described herein again.

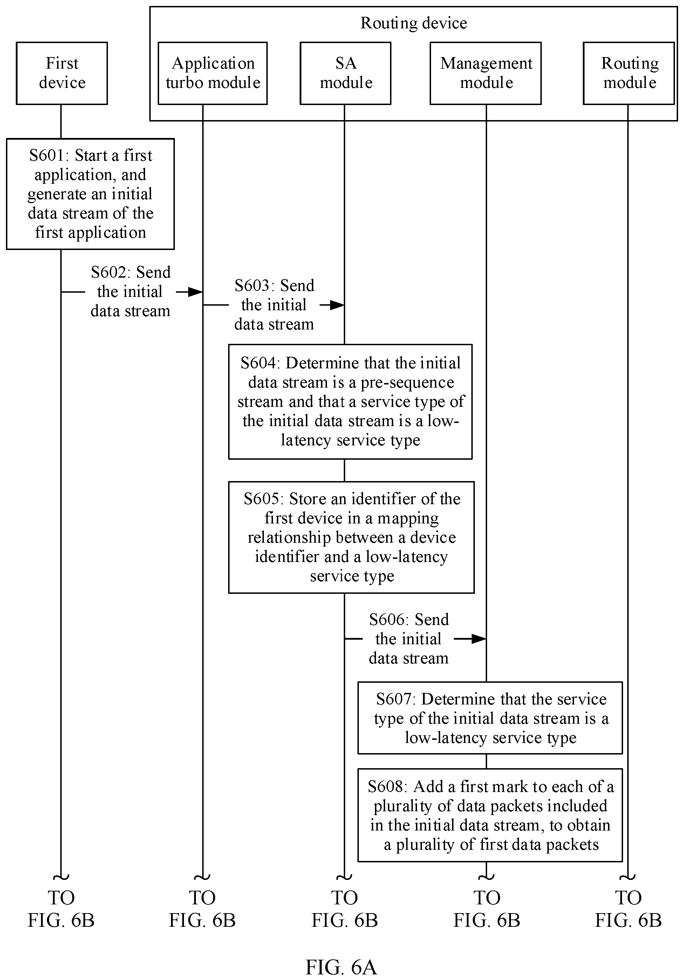

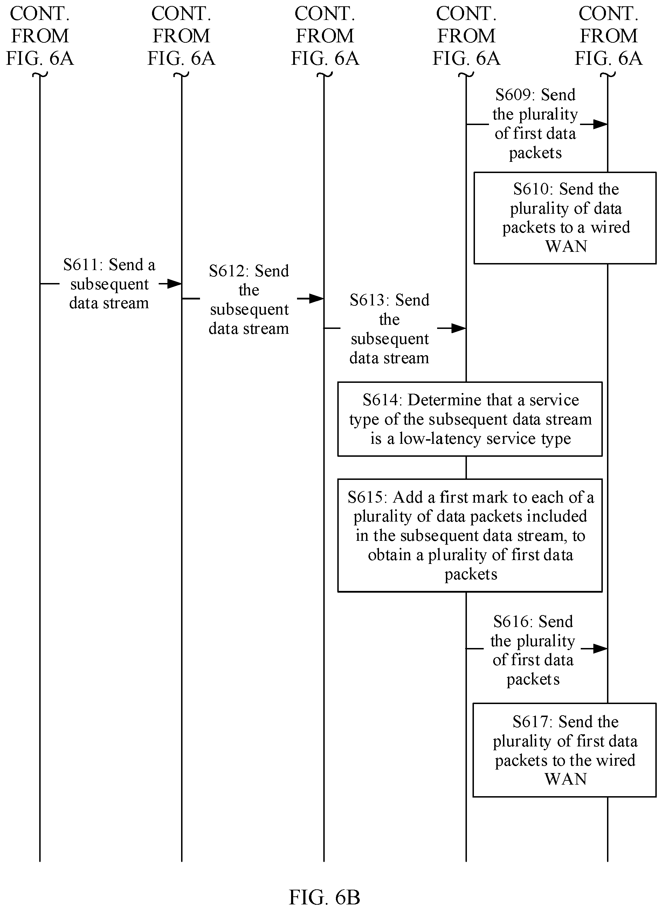

Based on the service distribution system shown in FIG. 4, an embodiment of this application may further provide a service distribution use case. In this use case, a service type of a data stream sent by a first device is a low-latency service type. As shown in FIG. 6A and FIG. 6B, this use case includes the following steps.

S601: A first device starts a first application, and generates an initial data stream of the first application.

The initial data stream represents a data stream generated when the first application is started for the first time.

S602: The first device sends the initial data stream to an application turbo module of a routing device. The application turbo module of the routing device receives the initial data stream from the first device.

S603: The application turbo module of the routing device sends the initial data stream to an SA module. The SA module of the routing device receives the initial data stream from the application turbo module.

S604: The SA module of the routing device determines that the initial data stream is a pre-sequence stream and that a service type of the initial data stream is a low-latency service type.

S605: The SA module of the routing device stores an identifier of the first device in a mapping relationship between a device identifier and a low-latency service type.

In some embodiments, when determining that the service type of the initial data stream is a low-latency service type, the SA module of the routing device may mark the first device as a low-latency device.

S606: The SA module of the routing device sends the initial data stream to a management module of the routing device. The management module of the routing device receives the initial data stream from the SA module.

S607: When the stored mapping relationship between the device identifier and the low-latency service type includes the identifier of the first device, the management module of the routing device determines that the service type of the initial data stream is a low-latency service type.

S608: The management module of the routing device adds a first mark to each of a plurality of data packets included in the initial data stream, to obtain a plurality of first data packets.

The first mark indicates to transmit a data packet through a wired WAN.

S609: The management module of the routing device sends the plurality of first data packets to a routing module of the routing device. The routing module receives the plurality of first data packets from the management module.

S610: The routing module of the routing device sends the plurality of first data packets to the wired WAN.

In some embodiments, after receiving the plurality of first data packets, the routing module may parse the plurality of first data packets, to determine the first marks in the plurality of first data packets. The routing module may send the plurality of first data packets including the first marks to the wired WAN based on a mapping relationship between a mark and a WAN.

S611: The first device sends a subsequent data stream to the application turbo module of the routing device in a running process of the first application. The application turbo module of the routing device receives the subsequent data stream from the first device.

S612: The application turbo module of the routing device sends the subsequent data stream to the SA module. The SA module of the routing device receives the subsequent data stream from the application turbo module.

S613: After determining that the subsequent data stream is a core stream, the SA module of the routing device sends the subsequent data stream to the management module of the routing device. The management module of the routing device receives the subsequent data stream from the SA module.

S614: When the stored mapping relationship between the device identifier and the low-latency service type includes the identifier of the first device, the management module of the routing device determines that a service type of the subsequent data stream is a low-latency service type.

S615: The management module of the routing device adds a first mark to each of a plurality of data packets included in the subsequent data stream, to obtain a plurality of first data packets.

S616: The management module of the routing device sends the plurality of first data packets to the routing module of the routing device. The routing module receives the plurality of first data packets from the management module.

S617: The routing module of the routing device sends the plurality of first data packets to the wired WAN.

According to the content shown in FIG. 6A and FIG. 6B, after receiving a data stream, the routing device identifies a service type of the data stream to distinguish between a low-latency data stream and a non-low-latency data stream, and distributes the low-latency data stream to a wired WAN, to avoid transmitting the low-latency data stream over the wireless WAN, thereby ensuring user experience of using a low-latency service.

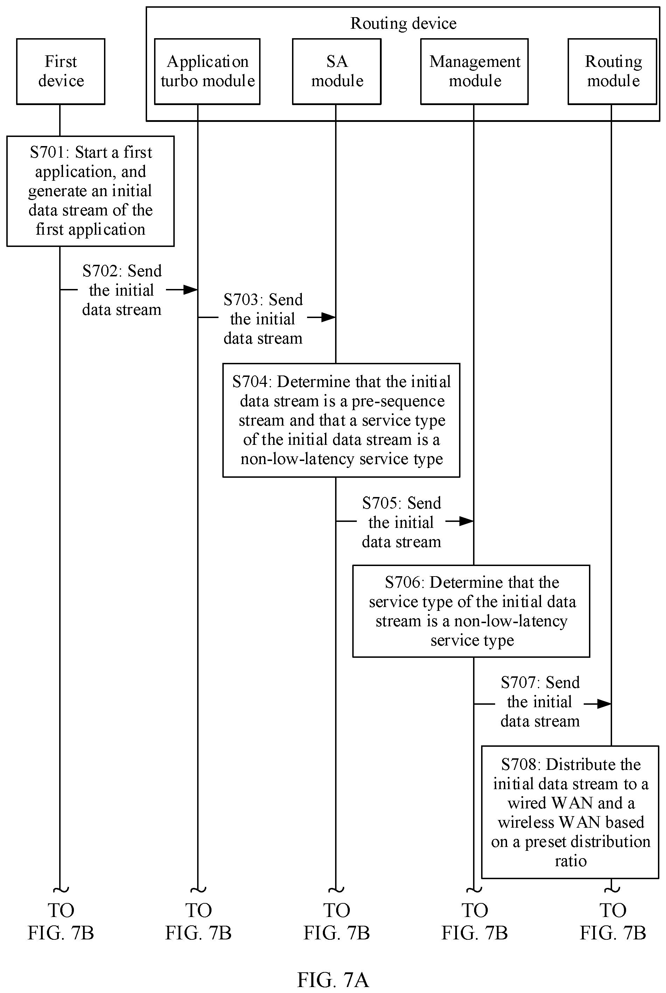

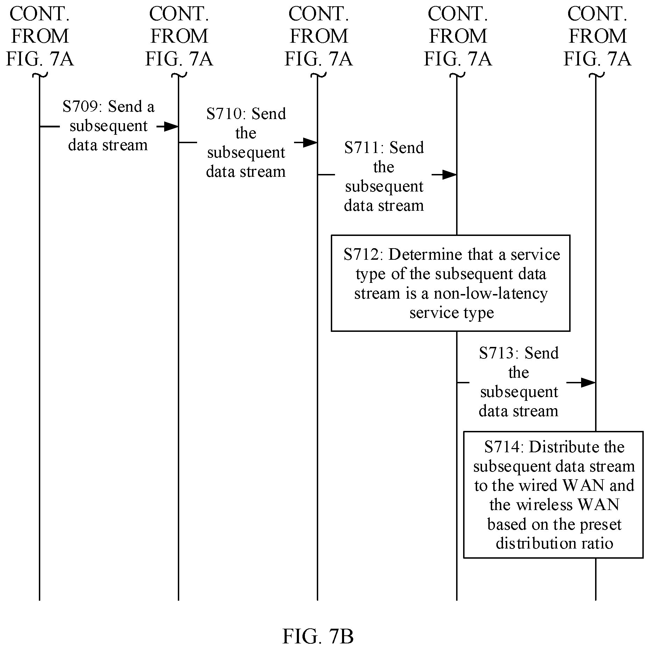

Based on the service distribution system shown in FIG. 4, an embodiment of this application may further provide a service distribution use case. In this use case, a service type of a data stream sent by a first device is a non-low-latency service type, and a routing module distributes the data stream of the non-low-latency service type. As shown in FIG. 7A and FIG. 7B, this use case includes the following steps.

S701: A first device starts a first application, and generates an initial data stream of the first application.

The initial data stream represents a data stream generated when the first application is started for the first time.

S702: The first device sends the initial data stream to an application turbo module of a routing device. The application turbo module of the routing device receives the initial data stream from the first device.

S703: The application turbo module of the routing device sends the initial data stream to an SA module. The SA module of the routing device receives the initial data stream from the application turbo module.

S704: The SA module of the routing device determines that the initial data stream is a pre-sequence stream and that a service type of the initial data stream is a non-low-latency service type.

S705: The SA module of the routing device sends the initial data stream to a management module of the routing device. The management module of the routing device receives the initial data stream from the SA module.

S706: When a stored mapping relationship between a device identifier and a low-latency service type does not include an identifier of the first device, the management module of the routing device determines that the service type of the initial data stream is a non-low-latency service type.

S707: The management module of the routing device sends the initial data stream to a routing module of the routing device. The routing module receives the initial data stream from the management module.

S708: The routing module of the routing device distributes the initial data stream to a wired WAN and a wireless WAN based on a preset distribution ratio.

A process of distributing the initial data stream by the routing module in step S708 is the same as a process of distributing the data stream by the routing device in the foregoing embodiment. Details are not described herein again.

S709: The first device sends a subsequent data stream to the application turbo module of the routing device in a running process of the first application. The application turbo module of the routing device receives the subsequent data stream from the first device.

S710: The application turbo module of the routing device sends the subsequent data stream to the SA module. The SA module of the routing device receives the subsequent data stream from the application turbo module.

S711: After determining that the subsequent data stream is a core stream, the SA module of the routing device sends the subsequent data stream to the management module of the routing device. The management module of the routing device receives the subsequent data stream from the SA module.

S712: When the stored mapping relationship between the device identifier and the low-latency service type does not include the identifier of the first device, the management module of the routing device determines that a service type of the subsequent data stream is a non-low-latency service type.

S713: The management module of the routing device sends the subsequent data stream to the routing module of the routing device. The routing module receives the subsequent data stream from the management module.

S714: The routing module of the routing device distributes the subsequent data stream to the wired WAN and the wireless WAN based on the preset distribution ratio.

A process of distributing the subsequent data stream by the routing module in step S714 is the same as a process of distributing the data stream by the routing device in the foregoing embodiment. Details are not described herein again.

According to the content shown in FIG. 7A and FIG. 7B, after receiving a data stream, the routing device identifies a service type of the data stream to distinguish between a low-latency data stream and a non-low-latency data stream, and distributes the non-low-latency data stream to a wired WAN and a wireless WAN based on a preset distribution ratio, thereby increasing user bandwidth, avoiding transmitting the low-latency data stream over the wireless WAN, and further ensuring user experience of using a low-latency service.

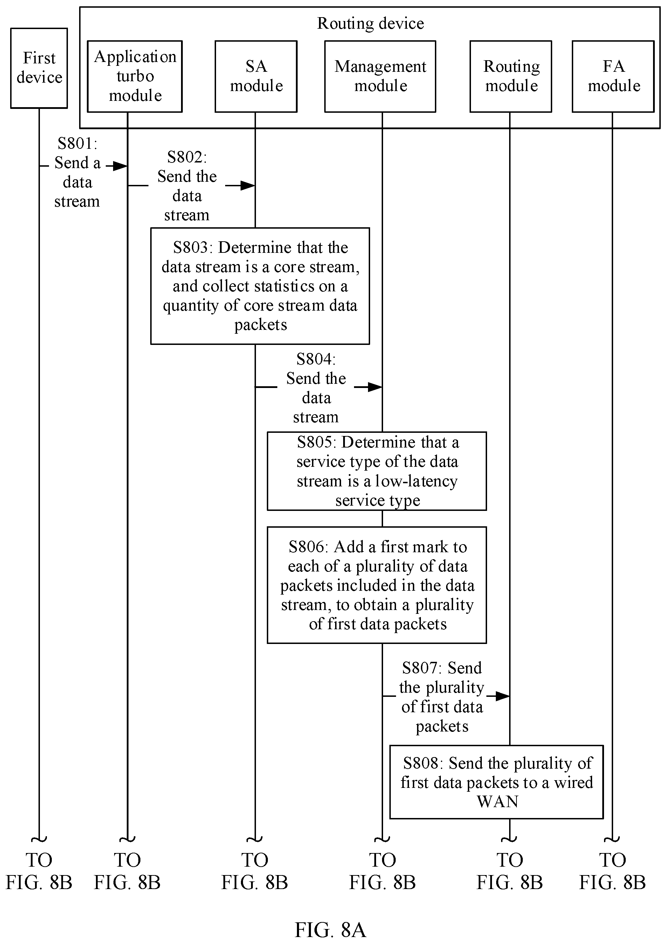

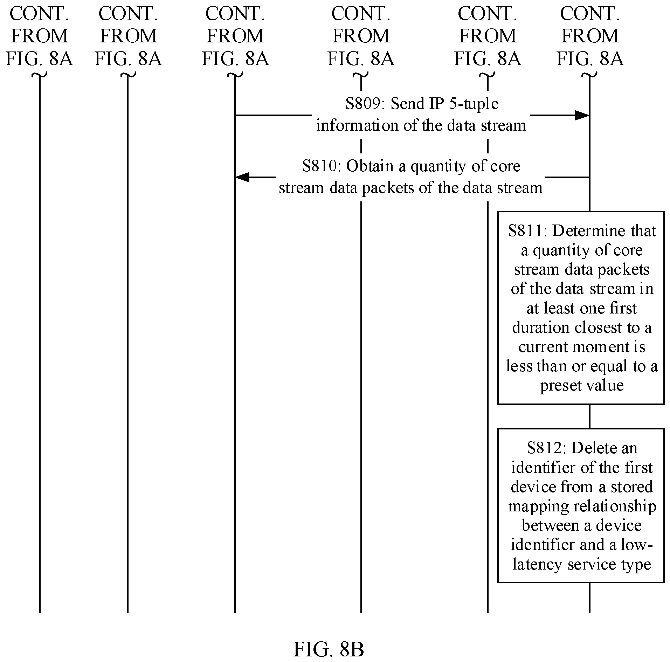

Based on the service distribution system shown in FIG. 4, an embodiment of this application may further provide a service distribution use case. In this use case, a service type of a data stream sent by a first device is a low-latency service type, and an FA module of a device detects that a transmission status of a core stream of the first device is that transmission ends. As shown in FIG. 8A and FIG. 8B, this use case includes the following steps.

S801: A first device sends a data stream to an application turbo module of a routing device. The application turbo module of the routing device receives the data stream from the first device.

The data stream is a data stream generated when a first application in the first device runs.

S802: The application turbo module of the routing device sends the data stream to an SA module. The SA module of the routing device receives the data stream from the application turbo module.

S803: The SA module of the routing device determines that the data stream is a core stream, and collects statistics on a quantity of core stream data packets.

S804: The SA module of the routing device may send the data stream to a management module of the routing device. The management module of the routing device receives the data stream from the SA module.

S805: When a stored mapping relationship between a device identifier and a low-latency service type includes an identifier of the first device, the management module of the routing device determines that a service type of the data stream is a low-latency service type.

S806: The management module of the routing device adds a first mark to each of a plurality of data packets included in the data stream, to obtain a plurality of first data packets.

The first mark indicates to transmit a data packet through a wired WAN.

S807: The management module of the routing device sends the plurality of first data packets to a routing module of the routing device. The routing module receives the plurality of first data packets from the management module.

S808: The routing module of the routing device sends the plurality of first data packets to the wired WAN.

An execution process of step S808 is the same as an execution process of step S610. Details are not described herein again.

S809: The SA module of the routing device sends IP 5-tuple information of the data stream to an FA module of the routing device. The FA module of the routing device receives the IP 5-tuple information from the SA module.

There is no execution sequence between step S804 and step S809.

S810: The FA module of the routing device obtains a quantity of core stream data packets of the data stream from the SA module of the routing device.

In some embodiments, after determining that the data stream is a core stream, the SA module may perform traffic statistics collection on the data stream, to determine a quantity of core stream data packets of the data stream. The FA module may query, from the SA module, the quantity of core stream data packets of the data stream based on the IP 5-tuple information of the data stream.

S811: The FA module of the routing device determines that a quantity of core stream data packets of the data stream in at least one first duration closest to a current moment is less than or equal to a preset value.

In some embodiments, when determining that the quantity of core stream data packets of the data stream in the at least one first duration closest to the current moment is less than or equal to the preset value, the FA module may determine that a transmission status of the data stream is that transmission ends.

S812: The FA module of the routing device deletes the identifier of the first device from the stored mapping relationship between the device identifier and the low-latency service type.

In some embodiments, after determining that transmission of the data stream ends, the FA module may directly delete the identifier of the first device from the stored mapping relationship between the device identifier and the low-latency service type. In other words, after determining that transmission of the data stream ends, the FA module marks the first device from a low-latency device as a non-low-latency device. In this way, the routing device directly distributes the data stream of the first device based on a preset distribution ratio subsequently.

According to the content shown in FIG. 8A and FIG. 8B, when distributing a data stream whose service type is a low-latency service type to a wired WAN, a routing device may further perform traffic statistics collection on the data stream, determine a transmission end moment of a core stream that needs to be guaranteed for the data stream, and when the transmission of the core stream ends, remove an identifier of a first device from a stored mapping relationship between a device identifier and a low-latency service type, so that a subsequent data stream of the first device can be distributed based on a preset distribution ratio. In this way, user experience of using a low-latency service can be ensured, and user bandwidth can be increased, thereby improving Internet access experience of a user.

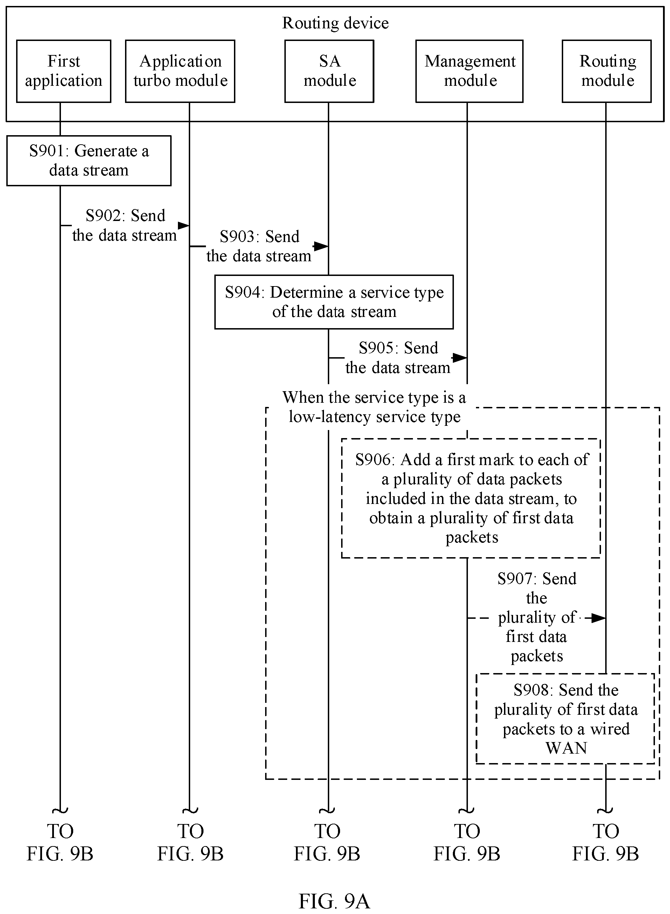

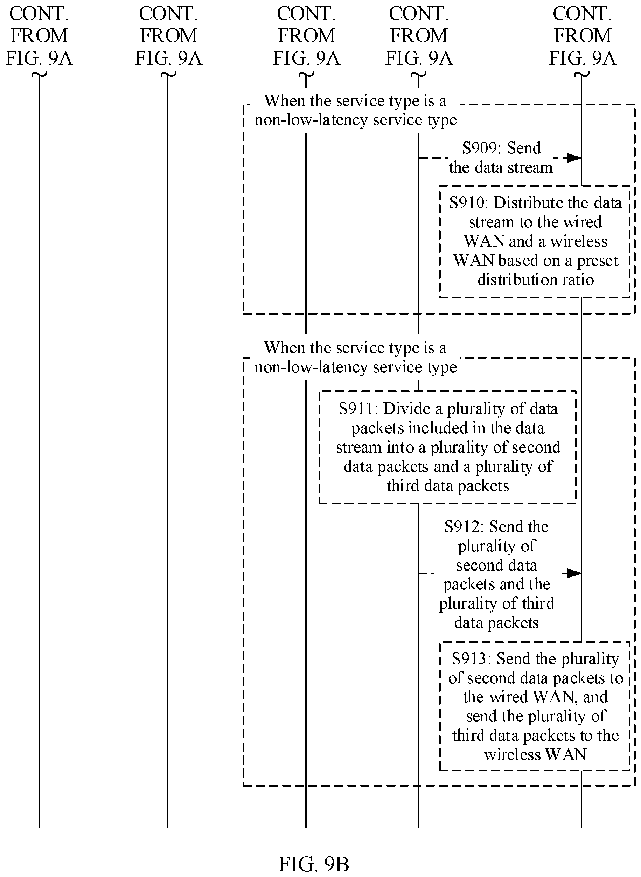

Based on the service distribution system shown in FIG. 4, an embodiment of this application may further provide a service distribution use case. In this use case, the data stream is a data stream of a routing device. As shown in FIG. 9A and FIG. 9B, this use case includes the following steps.

S901: A first application of a routing device generates a data stream in a process in which the routing device runs the first application.

S902: The first application of the routing device sends the data stream to an application turbo module of the routing device. The application turbo module of the routing device receives the data stream from the first application.

S903: The application turbo module of the routing device sends the data stream to an SA module of the routing device. The SA module of the routing device receives the data stream from the application turbo module.

S904: The SA module of the routing device determines a service type of the data stream.

S905: The SA module of the routing device sends the data stream to a management module of the routing device. The management module of the routing device receives the data stream from the SA module.

In some embodiments, when the service type of the data stream is a low-latency service type, steps S906 to S908 are subsequently performed; or when the service type of the data stream is a non-low-latency service type, steps S909 and 910 are subsequently performed, or steps S911 to S913 are subsequently performed.

S906: When the service type is a low-latency service type, the management module of the routing device adds a first mark to each of a plurality of data packets included in the data stream, to obtain a plurality of first data packets.

The first mark indicates to transmit a data packet through a wired WAN.

S907: The management module of the routing device sends the plurality of first data packets to a routing module of the routing device. The routing module receives the plurality of first data packets from the management module.

S908: The routing module of the routing device sends the plurality of first data packets to the wired WAN.

In some embodiments, after receiving the plurality of first data packets, the routing module may parse the plurality of first data packets, to determine the first marks in the plurality of first data packets. The routing module may send the plurality of first data packets including the first marks to the wired WAN based on a mapping relationship between a mark and a WAN.

S909: When the service type is a non-low-latency service type, the management module of the routing device sends the data stream to the routing module of the routing device. The routing module receives the data stream from the management module.

S910: The routing module of the routing device distributes the data stream to the wired WAN and a wireless WAN based on a distribution ratio.

An execution process of step S910 is the same as the process in which the routing device distributes the data stream to the wired WAN and the wireless WAN in the foregoing embodiment. Details are not described herein again.

S911: When the service type is a non-low-latency service type, the management module of the routing device divides a plurality of data packets included in the data stream into a plurality of second data packets and a plurality of third data packets.

The second data packet includes a first mark, the third data packet includes a second mark, and the second mark indicates to transmit a data packet through the wireless WAN. A ratio of a quantity of the plurality of second data packets to a quantity of the plurality of third data packets is a distribution ratio of the wired WAN to the wireless WAN.

An execution process of step S911 is the same as the process in which the routing device distributes the data stream to the wired WAN and the wireless WAN in the foregoing embodiment. Details are not described herein again.

S912: The management module of the routing device sends the plurality of second data packets and the plurality of third data packets to the routing module of the routing device. The routing module receives the plurality of second data packets and the plurality of third data packets from the management module.

S913: The routing module of the device sends the plurality of second data packets to the wired WAN, and sends the plurality of third data packets to the wireless WAN.

According to the content shown in FIG. 9A and FIG. 9B, after obtaining a data stream, the routing device may distinguish between a low-latency data stream and a non-low-latency data stream based on a service type of the data stream, distribute the low-latency data stream to a wired WAN, and distribute the non-low-latency data stream to the wired WAN and a wireless WAN, to avoid transmitting the low-latency data stream over the wireless WAN, thereby ensuring user experience of using a low-latency service.

Based on the foregoing content and a same technical concept, this application provides a routing device, including one or more memories and one or more processors. The one or more memories are configured to store one or more programs. When the one or more programs are invoked by the one or more processors, the routing device is enabled to perform the steps performed by the routing device in the foregoing method embodiments. In embodiments of this application, the routing device may access the Internet through a wired WAN, and the routing device may further access the Internet through a wireless WAN.

Based on the foregoing content and a same concept, this application provides a readable storage medium (which may also be referred to as a computer-readable storage medium). The readable storage medium stores one or more programs. When the one or more programs are executed by a routing device, the routing device performs the steps performed by the routing device in the foregoing method embodiments.

Based on the foregoing content and a same concept, this application provides a program product (which may also be referred to as a computer program product). The program product includes a program or instructions. When the program or the instructions are executed by a routing device, the routing device performs the steps performed by the routing device in the foregoing method embodiments.

A person skilled in the art should understand that embodiments of this application may be provided as a method, a routing device, or a program product. Therefore, this application may use a form of hardware only embodiments, software only embodiments, or embodiments with a combination of software and hardware.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A service distribution method, applied to a routing device, wherein the routing device accesses the Internet through a wired WAN, and the routing device accesses the Internet through a wireless WAN, and the method comprises:
obtaining a data stream generated by a first application;
determining a service type of the data stream;
sending the data stream to the wired WAN when the service type is a low-latency service type, to transmit the data stream through the wired WAN; and
distributing the data stream to the wired WAN and the wireless WAN when the service type is a non-low-latency service type, to transmit the data stream through the wired WAN and the wireless WAN.

2. The method according to claim 1, wherein the obtaining the data stream generated by the first application comprises:
obtaining the data stream in a process in which the routing device runs the first application; or
obtaining the data stream from a first device in a process in which the first device runs the first application.

3. The method according to claim 2, wherein when the data stream is the data stream of the first device, the determining the service type of the data stream comprises:
when the data stream is a pre-sequence stream, performing service identification on the data stream and determining the service type of the data stream, wherein the pre-sequence stream comprises a data packet generated when the first application is started; or
when the data stream is a core stream, determining the service type of the data stream based on an identifier of the first device, wherein the core stream comprises a data packet generated in a running process after the first application is started.

4. The method according to claim 3, wherein the determining the service type of the data stream based on the identifier of the first device comprises:
when a stored mapping relationship between a device identifier and a low-latency service type comprises the identifier of the first device, determining that the service type of the data stream is the low-latency service type; or
when a stored mapping relationship between a device identifier and a low-latency service type does not comprise the identifier of the first device, determining that the service type of the data stream is the non-low-latency service type.

5. The method according to claim 3 or 4, wherein when the data stream is the pre-sequence stream and the service type of the data stream is the low-latency service type, the method further comprises:
storing the identifier of the first device in the mapping relationship between the device identifier and the low-latency service type.

6. The method according to claim 4 or 5, wherein when the data stream is the core stream and the service type of the data stream is the low-latency service type, the method further comprises:
performing traffic statistics collection on the data stream, and determining a quantity of core stream data packets of the data stream in at least one first duration closest to a current moment; and
when the quantity of core stream data packets of the data stream in the at least one first duration closest to the current moment is less than or equal to a preset value, determining that a transmission status of the data stream is that transmission ends; and
deleting the identifier of the first device from the stored mapping relationship between the device identifier and the low-latency service type.

7. The method according to any one of claims 1 to 6, wherein the sending the data stream to the wired WAN when the service type is the low-latency service type, to transmit the data stream through the wired WAN comprises:
adding a first mark to each of a plurality of data packets comprised in the data stream, to obtain a plurality of first data packets, wherein the first mark indicates to transmit a data packet through the wired WAN; and
sending the plurality of first data packets to the wired WAN.

8. The method according to any one of claims 1 to 7, wherein the distributing the data stream to the wired WAN and the wireless WAN when the service type is the non-low-latency service type, to transmit the data stream through the wired WAN and the wireless WAN comprises:
sending a plurality of second data packets comprised in the data stream to the wired WAN; and
sending a plurality of third data packets comprised in the data stream to the wireless WAN, wherein
a ratio of a quantity of the plurality of second data packets to a quantity of the plurality of third data packets is a distribution ratio of the wired WAN to the wireless WAN.

9. A routing device, wherein the routing device comprises one or more processors, one or more memories, and one or more programs; and
the one or more programs are stored in the one or more memories, and when the one or more programs are invoked by the one or more processors, the routing device is enabled to perform the method according to any one of claims 1 to 8.

10. A program product, wherein when the program product runs on a routing device, the routing device is enabled to perform the method according to any one of claims 1 to 8.
